# EUROPÄISCHE PATENTSCHRIFT

(11) **EP 0 830 399 B1**
(45) Veröffentlichungstag und Bekanntmachung des Hinweises auf die Patenterteilung: **18.09.2002**
(21) Anmeldenummer: 97902324.9
(22) Anmeldetag: 05.02.1997
(51) Int. Cl.: C08F 220/12

(54) **POLYMETHACRYLAT-FORMMASSE MIT ETHYLEN**
POLYMETHACRYLATE MOULDING COMPOUND WITH ETHYLENE
MATIERE MOULABLE A BASE DE POLYMETHACRYLATE ET CONTENANT DE L'ETHYLENE

(30) Priorität: 24.02.1996 DE 19607003
(43) Veröffentlichungstag der Anmeldung: 25.03.1998
(73) Patentinhaber: Röhm GmbH & Co. KG, 64293 Darmstadt (DE)
(72) Erfinder: SIOL, Werner, D-64297 Darmstadt (DE); WICKER, Michael, D-64342 Seeheim-Jugenheim (DE)
(86) Internationale Anmeldenummer: EP9700503
(87) Internationale Veröffentlichungsnummer: WO97031043

(56) Entgegenhaltungen:
- DE-A- 1 520 734

## Beschreibung

Die Erfindung betrifft thermoplastisch verarbeitbare Formmassen, die zu einem hohen Anteil aus Methylmethacrylat-Einheiten bestehen und Ethylen als Comonomeres aufweisen.

### Stand der Technik

Formmassen aus Polymethylmethacrylat sind seit langem bekannt und bieten die Vorteile guter thermoplastischen Verarbeitbarkeit, hoher Transparenz und guter Witterungbeständigkeit. Derartige Formmassen enthalten in der Regel 80 - 99 Gew.-% Methylmethacrylat-Einheiten sowie einen restlichen Anteil anderer Monomer-Einheiten wie z. B. Acrylsäureestem oder Styrol.

Die Ceiling-Temperatur Tc ist diejenige Temperatur von Homopolymeren bei der Polymerisation und Depolymerisation im Gleichgewicht stehen. Sie kann daher als Maß für die thermische Beständigkeit eines Polymers gelten. Reines Polymethylmethacrylat hat eine relativ niedrige Ceiling-Temperatur Tc on etwa 160 °C und damit eine relativ geringe Stabilität gegen thermischen Abbau. Wesentlich für eine gute Verarbeitungsstabilität ist dabei, daß die Polymethylmethacrylat-Ketten keine Schwachstellen enthalten, wie sie durch Rekombination oder Disproportionierung von PMMA-Radikalen entstehen. In der Regel werden daher PMMA-Formmassen zur Erzielung einer guten Verarbeitungsstabilität mit möglichst wenig Initiator hergestellt. Besonders stabil sind Polymethylmethacrylat-Ketten, die durch einen Übertragungsschritt terminiert worden sind (DE 43 40 887).

Da Polymethylmethacrylat-Formmassen in der Regel bei weitaus höheren Temperaturen, z. B. in Spritzgußverfahren bei ca. 200 - 270 °C, verarbeitet werden, werden sie z. B. durch die Copolymerisation mit anderen Monomeren stabilisiert. Als Comonomere sind z. B. Styrol oder Acrylsäureester gebräuchlich (Tc = 275 °C bzw. ca. 400 °C). Ein besonderer Vorteil dieser Monomere ergibt sich dadurch, daß sie relativ gut mit Methylmethacrylat copolymerisierbar sind. Copolymerisationsparameter bei radikalischer Polymerisation, z. B. für das System Methylmethacrylat = M1, Methylacrylat = M2 sind r1 = 2,15, r2 = 0,40, für das System Methylmethacrylat = M1, Styrol = M2, r1 = 0,45, r2 = 0,44 (siehe z. B. Brandrup, J., Immergut, E.H., Polymerhandbook, 3rd Edition, 1989, John Eiley & Sons, N.Y.)

Betrachtet man dagegen die Copolymerisationsparameter von Ethylen mit Methylmethacrylat so wird klar, daß diese Verbindungen vergleichsweise schlecht miteinander copolymerisierbar sind. Brown und Ham (J. Polymer Sci., Part A, Vol 2, S. 3623, 1964) geben für das System Ethylen = M₁ und Methylmethacrylat = M₂ für eine Temperatur von 150 °C die folgenden r-Parameter an: r₁= 0,2, r₂ = 17. Dies bedeutet, daß ein System Methylmethacrylat/Ethylen auch bei geringem Methylmethacrylat-Angebot des MMA nahezu vollständig in das Copolymere eingebaut wird. Andererseits wird auch bei einer Polymerisationstemperatur von z. B. 150° C und hohem Druck ein erheblicher Überschuß an Ethylen erforderlich sein, um auch nur geringe Anteile an Ethylen mit Methylmethacrylat zu copolymerisieren.

Ethylen-(Meth)acrylat-Copolymere mit Methylmethacrylat-Anteilen bis zu 60 Gew.-% sind aus Räztsch (1971, Plaste und Kautschuk, 18, S. 402) bekannt. Rätzsch beschreibt Copolymere von Ethylen mit steigenden Anteilen von Acrylaten, u. a. auch Methylmethacrylat. Nach Rätzsch erfolgt die Polymerisation bei 1500 bar und Temperaturen von 200 - 250° C. Die Copolymerisationparameter unter diesen Bedingungen betragen nach Rätzsch etwa 0,17 für das Ethylen und 18 für das Methylmethacrylat. Copolymere mit ca. 60 Gew.-% Methylmethacrylat werden als klebrig eingestuft. Angaben zu entsprechenden Copolymeren mit höheren Anteilen von Methylmethacrylat sind nicht enthalten.

Polymethylmethacrylat-Formmassen mit entsprechend handelsüblichen Formmassen mit Methylmethacrylat-Anteilen von 80 Gew.-% oder mehr, die Ethylen als Comonomere enthalten sind nicht bekannt. Dies dürfte vor allem durch die, wie oben ausgeführt, ungünstigen Copolymerisationsparameter als auch dadurch bedingt sein, daß Ethylen unter hohem Druck als Gas verarbeitet werden muß, wofür entsprechend aufwendige Anlagen notwendig wären.

### Aufgabe und Lösung

Der Erfindung liegt die Aufgabe zugrunde eine Polymethylmethacrylat-Formmasse bereitzustellen, die den gestiegenen Anforderungen an die thermoplastische Verarbeitbarkeit, insbesondere bei höheren Verarbeitungstemperaturen, in besonderer Weise entspricht. Darüberhinaus sollte die neue Formmasse gegenüber herkömmlichen Polymethylmethacrylat-Formmassen gegebenenfalls weitere Vorteile, z. B. bezüglich der Wasseraufnahme oder der Sprödigkeit aufweisen.

Die Aufgabe wurde gelöst durch eine thermoplastisch verarbeitbare Methylmethacrylat-Ethylen-copolymerformmasse
dadurch gekennzeichnet, daß sie aus Monomereinheiten von
a) 80 - 99,9 Gew.-% Methylmethacrylat
b) 0,1 - 20 Gew.-% Ethylen
c) 0 - 19,9 Gew.-% weitere Comonomeren
besteht.

Wesentlich für die Erfindung ist Verwendung von Ethylen als Comonomerem. Die erfindungsgemäßen Formmassen decken je nach Zusammensetzung weite Bereich möglicher Anwendungen ab. Formmassen mit sehr hohen Anteilen von Methylmethacrylat und geringeren Ethylenanteilen zeichnen sich durch sehr hohe Wärmeformbeständigkeiten und hohe Stabilität gegen thermischen Abbau aus. Es wird vermutet, daß der vergleichsweise hohe Stabilitätsunterschied zwischen dem stabilen Polymethylmethacrylat-Radikal und den entsprechenden Polyethylenradikalen bei thermischer Depolymerisation entstehender Ethylenradikale maßgeblich zur stabilisierenden Wirkung der Polymethylmethacrylat-Polymerketten beiträgt Formmassen mit hohem Ethylenanteil und vermindertem Methylmethacrylatanteil weisen eine geringe Sprödigkeit und eine verminderte Tendenz zur Wasseraufnahme auf. Während herkömmlich verwendete Comonomere wie z. B. Butylacrylat vor allem die Seitenkettenbeweglichkeit des Polymeren erhöhen sollten, wird angenommen, daß Ethylen als Comonomer zu einer Erhöhung der Beweglichkeit der Polymerhauptkette beiträgt, wodurch Spannungen leichter ausgeglichen werden können. Da Ethylen unpolar ist, wird eine Einlagerung von Wassermolekülen in die Polymermatrix erschwert. Die zusätzliche Verwendung weiterer, üblicherweise in Methacrylatformmassen eingesetzter Comonomere, wie z. B. (Meth)acrylsäureestem oder Styrol, läßt eine Variation der Eigenschaften der Methylmethacrylat-Ethylen-Copolymere in fast beliebiger Weise zu.

### Ausführung der Erfindung

Die Erfindung wird bevorzugt durch radikalische Polymerisation der Monomeren in Gegenwart von Polymerisationsinitiatoren und Molekulargewichtsreglern ausgeführt. Die erfindungsgemäßen Formmassen bestehen zu 80 - 99,9 Gew.-%, bevorzugt zu 91 - 99,8 Gew.-%, aus Methylmethacrylat und zu 0,1 - 20 Gew.-%, bevorzugt zu 0,2 - 9 Gew.-% aus Ethylen. Weitere, an sich üblicherweise in Polymethylmethacrylatformmassen verwendete Comonomere können in Mengen von 0 - 19,9 Gew.-%, bevorzugt zu 0 - 8,8 Gew.-%, vorhanden sein. Letztere können z.B. Acrylsäureester mit vorzugsweise C1 - C8-Alkyl im Esterrest, vorzugsweise Methyacrylat, Methacrylsäureester mit vorzugsweise C1 - C8-Alkyl im Esterrest, (Meth)acrylnitril, (Meth)acrylsäureamide, Styrol, α-Methylstyrol, Vinylester, Vinylamide, Maleinsäure oder deren Derivate sowie gegebenenfalls noch andere copolymerisierbare Monomere sein (vgl. H. Rauch-Puntigam, Th. Völker, Acryl- und Methacrylverbindungen, Springer-Verlag, 1967).

### Das Polymerisationsverfahren

Bei dem erfindungsgemäßen Polymerisationsverfahren geht man von den reinen Monomeren bzw. den Monomermischungen aus, die neben den Polymerisationsinitiatoren und den Molekulargewichtsreglem gegebenenfalls noch weitere übliche Zuschlagstoffe wie beispielsweise Formtrennmittel, Farbstoffe oder Trübungsmittel enthalten können. Übliche Mengen betragen ca. 0 - 10 Gew.-%, in der Regel nicht mehr als 5 Gew.-% oder weniger bezogen auf die eingesetzten Monomeren . Die Verwendung derartiger Zuschlagstoffe ist unkritsch für die Erfindung. Darüberhinaus ist es möglich die Polymerisation in Lösungsmitteln wie z. B. Butylacetat oder Toluol durchzuführen. Dabei wählt man üblicherweise eine Lösungsmittelkonzentration bis ca. 75 Gew.-%, bevorzugt von 5 - 50 Gew.-% bezogen auf den Gesamtansatz.

Als Polymerisationsinitiatoren werden die an sich für die radikalische Polymerisation von Methacrylaten üblichen verwandt, beispielsweise Azoverbindungen, wie Azodiisobutyronitril, sowie Peroxide, wie Dibenzoylperoxid oder Dilauroylperoxid, Dialkylperoxide, wie z. B. Di-tert.butylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Bevorzugt werden die Polymerisationsinitiatoren in Mengen von 10⁻⁴ bis 1 Gew.-% bezogen auf die Ausgangsstoffe, besonders bevorzugt in Mengen von 2 x 10⁻⁴ bis 0,1 Gew.-% und ganz besonders bevorzugt in Mengen von 10⁻³ bis 0,05 Gew.-% eingesetzt.

Als Molekulargewichts- oder Kettenübertragungsregler werden ebenfalls an sich übliche Verbindungen, insbesondere Mercaptane vom Typ R-SH verwendet, wobei R für eine ggfs. cyclische oder verzweigte Alkylgruppe mit 2 bis 20 Kohlenstoffatomen stehen kann. Als Beispiele können n-Butylmercaptan, Dodecylmercaptan, tert.-Dodecylmercaptan, Ester der Thioglykolsäure oder auch polyfunktionelle Mercaptane mit 2 bis 6 SH-Gruppen genannt werden. Die Molekulargewichtsregler werden vorzugsweise in Mengen von 0,05 bis 5 Gew.-% bezogen auf die Ausgangsstoffe eingesetzt (vgl. hierzu auch H. Rauch-Puntigam, Th. Völker, Acryl- und Methacrylverbindungen, Springer, Heidelberg, 1967). Besonders bevorzugt sind Mengen an Molekulargewichtsreglern von 0,1 bis 2 Gew.-%, ganz besonders bevorzugt Mengen von 0,2 bis 1 Gew.-%.

Weiterhin können beispielsweise auch andere Verbindungen wie CCl₄ oder Benzylbromid für die Molekulargewichtsregelung genutzt werden. Halogenhaltige Verbindungen sind jedoch weniger bevorzugt.

Bei hohen Polymerisationstemperaturen können auch z. B. Lösungsmittel wie Toluol als Kettenübertragungsregler fungieren. Bevorzugt werden allerdings Regler des Typs R-SH oder R'-H, wobei R' für Alkyl, Cycloalkyl oder Aralkyl mit 5 bis 30 Kohlenstoffatomen stehen kann, wie beispielsweise Cumol, die in der Lage sind, die wachsende Polymerkette mit einem H-Atom zu terminieren. Ein besonders gut geeigneter Molekulargewichtsregler ist z.B. Dodecylmercaptan.

Die Polymerisation kann je nach angewandtem Druck und Comomerzusammensetzung bei Temperaturen von etwa 80 - 280° C ausgeführt werden. Niedrigere Polymerisationstemperaturen führen in der Regel zu vermehrter Ausbildung von syndiotaktischen Triaden, die im Gegensatz zu den bei höheren Temperaturen entstehenden isotaktischen Triaden, die Wärmeformbeständigkeit begünstigen. Bei höheren Temperaturen werden in der Regel höhere Umsatzraten bei geringerem Initiatorverbrauch erzielt. Hohe Regler/Initiator-Verhältnisse, z.B. von mindestens 2:1, begünstigen die thermische Stabilität der Formmasse, da weniger instabile Endgruppen entstehen (siehe z. B. EP-B 245 647 = US 4 877 853 oder EP-A 656 374). Bevorzugt wird die radikalische Polymerisation von Methylmethacrylat, Ethylen und gegebenenfalls weiteren Comonomeren bei 120 - 250 °C, insbesondere bei 140 - 220 °C, besonders bevorzugt bei 150 - 200° C ausgeführt. Dabei kann das Ethylenangebot über den Druck eingestellt werden. Üblicherweise wird in einem Druckbereich von 1 - 2000 bar gearbeitet. Drücke von 5 - 500 bar, insbesondere von 8 - 60 bar sind bevorzugt.

Die Herstellung der erfindungsgemäßen Poly-Methylmethacrylat/Ethylen-Formmassen erfolgt entweder diskontinuierlich, batchweise oder bevorzugt im kontinuierlich Verfahren, wobei dann bevorzugt nicht bis zum vollstänigen Umsatz der Monomere polymerisiert wird.

Bei einer batchweisen Herstellung kann nach einer Reaktionszeit, die temperatur- und druckabhängig z. B. 10 - 120 min, bevorzugt 20 - 60 min betragen kann, eine Entspannung z. B. in einem größeren Kessel oder im Sinne einer Flash-Entgasung erfolgen. Auf diese Weise kann nicht polymerisiertes Monomer, insbesondere überschüssiges Ethylen, aus dem Polymermaterial entfernt werden. Wegen des zu erwartenden geringen Einbaus der Ethylenmonomere ins Copolymer sollte das nicht verbrauchte Ethylen abgezogen und in kontinuierlicher Verfahrensweise wieder der Polymerisation zugeführt werden. Das Polymersat kann nach Entspannung weiter entgast werden. Dies kann z. B. mittels eines Extruders mit Entgasungszonen geschehen. Auf diese Weise abgetrennte Restmonomere, Methylmethacrylat oder sonstige weitere Comonomere, können ebenfalls wie das Ethylen erneut dem Verfahren zugeführt werden. Das Copolymere kann vom Extruder ausgetragen, abgekühlt und zerkleinert werden. In dieser Form kann es zur Verarbeitung z. B. im Spritzguß oder zur Extrusion eingesetzt werden.

In einer bevorzugten Ausführungsform wird - insbesondere aufgrund der ungünstigen Copolymerisationsparameter - die Polymerisation nach kontinuierlichem Verfahren durchgeführt, wobei ein großer Teil des Ethylens und auch Teile des Methylmethacrylats sowie gegebenenfalls weiter Monomere bei einem Gesamtumsatz von 20 - 95 %, bevorzugt von 40 - 90 %, insbesondere von 50 - 80 % aus dem Gemisch aus Polymer-Mononomer und Lösungsmittel entfernt wird. Durch die Polymerisation mit unvollständigem Umsatz wird auch eine Propfung oder Vernetzung des Polymeren, wie bei geringem Monomerangebot auftreten kann, vermieden.

Beispielsweise kann die Polymerisation in einem Reaktor mit Rührwerk bei 160° C und einem Umsatz von ca. 50 % durchgeführt werden (siehe z. B. die EP 691 351 A1). Die Initiierung kann dann durch kontinuierliche Zugabe eines Initiators, z. B. 2,2'-Azobis-(isobutyronitril), erfolgen. Der Umsatz im Reaktor wird durch Dosieren von Methylmethacrylat/Ethylen und Austragen der zu ca. 50 % polymerisierten Mischung im Gleichgewicht gehalten. Die Entgasung kann z. B. wie in der EP-A 0 691 351 beschrieben erfolgen. Die abgetrennten Monomere können erneut der Polymerisation zugeführt werden.

Ebenso ist es möglich, insbesondere bei geringen Anteilen von Ethylen im Copolymeren, z .B. 0,2 Gew.-%, das Ethylen aus dem Prozeßkreislauf auszukreisen. Die Aufarbeitung der Formmasse, d. h. Abkühlen und Granulation kann in an sich bekannter Weise erfolgen (siehe z. B. EP-A 0 691 351).

Bevorzugt werden Copolymere mit einer Lösungsviskosität in Chloroform nach ISO 1628-6, von 40 - 200 cm3/g. Dabei werden Formmassen mit Lösungsviskositäten von 40 -120 cm3/g vor allem im Spritzguß eingesetzt, während Copolymere mit Lösungsviskositäten von 70 - 200 cm3/g insbesondere für die Extrusion geeignet sind.

Die thermoplastisch verarbeitbare Formmasse weist in bevorzugten Ausführungsformen einen Restethylen gehalt unter 1000 ppm auf.

### BEISPIELE

### Beispiel 1

In einen Autoklav von 0,5 I Volumen mit Rührer und Druckanzeige wird eine Mischung von 0,1 g Di-tert.-amylperoxid, 0,12 g Methyl-3-mercaptopropionat und 100 g Methylmethacrylat in 150 g Toluol gefüllt. Der Reaktor wird zweimal durch Aufdrücken von Argon mit 50 bar und nachfolgender Entspannung gespült. Anschließend wird Ethylen mit einem Druck von 50 bar aufgedrückt. Der Ethylendruck fällt zunächst auf ca. 37 bar ab (bedingt durch das teilweise Lösen des Ethylen im Toluol/Methylmethacrylat-Gemisch). Durch erneutes Aufdrücken von Ethylen wird wieder ein Druck von 50 bar eingestellt. Danach wird die Temperatur im Reaktor von anfangs 28° C auf 157° C erhöht. Dabei steigt der Druck auf ca. 85 bar. Es wird für ca. 50 min bei 157 - 159° C gerührt. Darauf wird innerhalb von 2 Stunden auf 49° C gekühlt und schließlich entspannt.

Man erhält eine klare, niedrigviskose Lösung. Zur Reinigung des Polymerisats wird die Lösung mit der 10-fachen Menge Petrolether gefällt. Das Polymer wird filtriert und im Vakuum getrocknet.
Das erhaltene Polymer weist folgende Eigenschaften auf:
Lösungsviskosität in Chloroform nach ISO 1628-6: J-Wert 29 ml/g *T*_{g}: 94° C
   (Unter der Annahme eines T_{g}-Wertes von -80° C für Polyethylen und 112° C für Polymethylmethacrylat errechnet sich nach Flory-Fox ein Ethylengehalt von ca. 5 Gew.-% im Copolymeren). Gemäß einer NMR-Bestimmung enthält das Copolymer ca. 4 - 5 Gew.-% Ethyleneinheiten. Thermostabilität, gemessen bei einer Aufheizrate von 5° C/ min. Das Maximum der Abbaugeschwindigkeit (*T*_{λmax}) wird erst bei 393,5° erreicht. Bei 360° C sind erst ca. 10 % des Polymeren abgebaut.

### Beispiel 2 (Vergleichsbeispiel)

Es wird verfahren wie in Beipiel 1, es wird jedoch kein Ethylen aufgedrückt.
Das erhaltene Polymerisat hat die folgenden Eigenschaften:
Lösungsviskosität in Chloroform nach ISO 1628-6: J-Wert 24 ml/g
   *T*_{g}: 112° C
   Thermostabilität, gemessen bei einer Aufheizrate von 5° C/ min. Das Maximum der Abbaugeschwindigkeit (*T*_{λmax}) wird bei 373° C erreicht. Bei 290° C sind ca. 10 % des Polymeren abgebaut.

## Patentansprüche

1. Thermoplastisch verarbeitbare Methylmethacrylat-Ethylen-Copolymerformmasse, **dadurch gekennzeichnet, daß** sie aus Monomereinheiten von
a) 80 - 99,9 Gew.-% Methylmethacrylat
b) 0,1 - 20 Gew.-% Ethylen
c) 0 - 19,9 Gew.-% weiteren Comonomeren
besteht.

2. Thermoplastisch verarbeitbare Formmasse nach Anspruch 1, **dadurch gekennzeichnet, daß** sie aus Monomereinheiten von
a) 91 - 99,8 Gew.-% Methylmethacrylat
b) 0,2 - 9 Gew.-% Ethylen
c) 0 - 8,8 Gew.-% weiteren Comonomeren
besteht.

3. Thermoplastisch verarbeitbare Formmasse nach Anspruch 1 oder 2, **dadurch gekennzeichnet, daß** sie eine Lösungsviskosität in Chloroform nach ISO 1628-6 von 20 - 250 cm³/g aufweist

4. Thermoplastisch verarbeitbare Formmasse nach Anspruch 2, **dadurch gekennzeichnet, daß** sie eine Lösungsviskosität in Chloroform nach ISO 1628-6 von 40 - 200 cm³/g aufweist

5. Thermoplastisch verarbeitbare Formmasse nach einem der Ansprüche 1 - 4, **dadurch gekennzeichnet, daß** der Restethylengehalt unter 1000 ppm liegt.

6. Verfahren zur Herstellung einer thermoplastisch verarbeitbaren Formmasse nach einem oder mehreren der Ansprüche 1 - 5, **dadurch gekennzeichnet, daß** die Polymerisation mit radikalischen Initiatoren in einem Temperaturbereich von 120 - 250° C durchgeführt wird.

7. Verfahren zur kontinuierlichen Herstellung einer thermoplastisch verarbeitbaren Formmasse nach einem oder mehreren der Ansprüche 1 bis 5, **dadurch gekennzeichnet, daß** die Polymerisation bei einem Umsatz, bezogen auf das eingesetzte Methylmethacrylat, im Bereich von 40 - 90 % durch kontinuierliches Dosieren der Monomeren, Polymerisationsinitiatoren, Molekulargewichtsreglem und gegebenenfalls weiterer üblicher Zuschlagstoffe, durch kontinuierliche Entnahme eines Teils des Polymerisationsgemisches und nachfolgende Abtrennung der flüchtigen Bestandteile der Polymerschmelze und anschließende Granulation durchgeführt wird.

8. Formkörper aus einer thermoplastisch verarbeitbaren Formmasse gemäß einem oder mehreren der Ansprüche 1 bis 5.

## Claims

1. Thermoplastically workable methyl methacrylate/ethylene copolymer moulding composition, **characterised in that** it consists of monomer units of
a) 80 - 99.90 wt.% of methyl methacrylate
b) 0.1 - 20 wt.% of ethylene
c) 0 - 19.9 wt.% of other comonomers.

2. Thermoplastically workable moulding composition according to claim 1, **characterised in that** it consists of monomer units of
a) 91 - 99.8 wt.% of methyl methacrylate
b) 0.2 - 9 wt.% of ethylene
c) 0 - 8.8 wt.% of other comonomers.

3. Thermoplastically workable moulding composition according to claim 1 or 2, **characterised in that** it has a solution viscosity in chloroform according to ISO 1628-6 of 20 - 250 cm³/g.

4. Thermoplastically workable moulding composition according to claim 2, **characterised in that** it has a solution viscosity in chloroform according to ISO 1628-6 of 40 - 200 cm³/g.

5. Thermoplastically workable moulding composition according to one of claims 1-4, **characterised in that** the residual ethylene content is less than 1000 ppm.

6. Process for preparing a thermoplastically workable moulding composition according to one or more of claims 1-5, **characterised in that** the polymerisation is carried out with radical initiators in a temperature range from 120 - 250°C.

7. Process for continuously preparing a thermoplastically workable moulding composition according to one or more of claims 1 to 5, **characterised in that** the polymerisation is carried out with a conversion, based on the methyl methacrylate used, in the range from 40 - 90%, by continuous metering of the monomers, polymerisation initiators, molecular weight regulators and optionally other conventional additives, by continuously removing some of the polymerisation mixture and subsequently removing the volatile constituents of the polymer melt followed by granulation.

8. Mouldings produced from a thermoplastically workable moulding composition according to one or more of claims 1 to 5.

## Revendications

1. Masse à mouler en copolymère méthacrylate de méthyle-éthylène transformable par voie thermoplastique,
**caractérisée en ce qu'**
elle se compose d'unités monomères de
a) 80 à 99,9 % en poids de méthacrylate de méthyle,
b) 0,1 à 20 % en poids d'éthylène,
c) 0 à 19,9 % en poids d'autres comonomères.

2. Masse à mouler transformable par voie thermoplastique selon la revendication 1,
**caractérisée en ce qu'**
elle se compose d'unités monomères de
a) 91 à 99,8 % en poids de méthacrylate de méthyle,
b) 0,2 à 9 % en poids d'éthylène,
c) 0 à 8,8 % en poids d'autres comonomères.

3. Masse à mouler transformable par voie thermoplastique selon la revendication 1,
**caractérisée en ce qu'**
elle présente une viscosité en solution dans le chloroforme selon ISO 1626-6 de 20 à 250 cm³/g.

4. Masse à mouler transformable par voie thermoplastique selon la revendication 2,
**caractérisée en ce qu'**
elle présente une viscosité en solution dans le chloroforme selon ISO 1626-6 de 40 à 200 cm³/g.

5. Masse à mouler transformable par voie thermoplastique selon l'une des revendications 1 à 4,
**caractérisée en ce que**
la teneur résiduelle en éthylène se situe en-dessous de 1000 ppm.

6. Procédé de fabrication de masse à mouler transformable par voie thermoplastique selon une ou plusieurs des revendications 1 à 5,
**caractérisé en ce qu'**
on conduit la polymérisation avec des initiateurs radicalaires dans un intervalle de température allant de 10 à 250°C.

7. Procédé de production en continu de masse à mouler transformable par voie thermoplastique selon une ou plusieurs des revendications 1 à 5,
**caractérisé en ce qu'**
on conduit la polymérisation à un taux de transformation, par rapport au méthacrylate de méthyle utilisé, allant de 40 à 90 % par dosage continu des monomères, des initiateurs de polymérisation, des régulateurs de poids moléculaire et le cas échéant d'autres additifs habituels, par prélèvement continu d'une partie du mélange de polymérisation puis séparation des constituants volatils de la masse fondue de polymère et enfin granulation.

8. Article moulé provenant d'une masse à mouler transformable par voie thermoplastique selon une ou plusieurs des revendications 1 à 5.
